# EUROPÄISCHE PATENTSCHRIFT

(11) **EP 1 573 075 B1**
(45) Veröffentlichungstag und Bekanntmachung des Hinweises auf die Patenterteilung: **11.11.2009**
(21) Anmeldenummer: 03757864.8
(22) Anmeldetag: 18.09.2003
(51) Int. Cl.: C21D 8/02, C22C 38/06, C22C 38/04

(54) **VERFAHREN ZUM HERSTELLEN EINES STAHLPRODUKTS**
METHOD FOR PRODUCING A STEEL PRODUCT
PROCEDE DE FABRICATION D'UN PRODUIT EN ACIER

(30) Priorität: 17.12.2002 DE 10259230
(43) Veröffentlichungstag der Anmeldung: 14.09.2005
(73) Patentinhaber: ThyssenKrupp Steel AG, 47166 Duisburg (DE)
(72) Erfinder: ENGL, Bernhard, 44267 Dortmund (DE); HELLER, Thomas, 47229 Duisburg (DE); HOFMANN, Harald, 44357 Dortmund (DE); MENNE, Manfred, 44803 Bochum (DE)
(74) Vertreter: Simons, Johannes
(86) Internationale Anmeldenummer: PCT/EP2003/010365
(87) Internationale Veröffentlichungsnummer: WO 2004/055223

(56) Entgegenhaltungen:
- WO-A-02/46480
- CA-A- 2 414 138
- DE-A- 19 727 759
- DE-A- 19 900 199
- DE-C- 19 933 113
- US-A- 3 024 103
- "Metals Handbook", 10th Edition, Vol. 1" 1990, ASM INTERNATIONAL , USA * Seite 205 - Seite 206 *

## Beschreibung

Die Erfindung betrifft ein Verfahren zum Herstellen eines Stahlprodukts, das eine hohe Streckgrenze aufweist. Bei dem erfindungsgemäßen Produkt kann es sich insbesondere um ein Stahlblech oder Stahlband handeln.

Ein für die Herstellung von Karosseriebauteilen und den Tieftemperatureinsatz verwendeter Leichtstahl ist aus der DE 197 27 759 C2 bekannt. Er enthält neben Fe 10 % bis 30 % Mn, 1% bis 8 % Al und 1 bis 6 % Si, wobei die Summe der Gehalte an Al und Si 12 % nicht überschreitet. In diesem bekannten Stahl ist Kohlenstoff allenfalls im Verunreinigungsbereich enthalten.

Beim aus der DE 199 00 199 A1 bekannten Leichtbaustahl ist dagegen Kohlenstoff als optionales Legierungselement vorgesehen. Der bekannte Leichtstahl weist > 7 % bis 27 % Mn, > 1 % bis 10 % Al, > 0,7 % bis 4 % Si, < 0,5 % C, < 10 % Cr, < 10 % Ni und < 0,3 % Cu auf. Des weiteren können in dem Stahl N, V, Nb, Ti, P enthalten sein, wobei die Summe dieser Elemente 2 % nicht überschreiten darf.

Stähle der voranstehend erläuterten Art weisen TWIP-Eigenschaften ("TWIP" = "Twinning Induced Plasticity") auf. Diese Eigenschaft bedeutet, dass sie eine hohe Duktilität bei gleichzeitig guter Festigkeit und geringem Gewicht besitzen. Dementsprechend kann für TWIP-Leichtbaustähle ein extrem hohes Produkt aus Zugfestigkeit und Dehnung ermittelt werden. Bei aus bekannten TWIP-Leichtbaustählen erzeugten Stahlblechen liegt die Mindeststreckgrenze üblicherweise im Bereich von 260 bis 330 MPa.

Noch höhere Streckgrenzen bei gleichzeitig guter Verformbarkeit können beispielsweise bei TRIP-Stählen ("TRIP" = "Transformation Induced Plasticity") oder bei Stählen erzielt werden, bei denen TWIP- und TRIP-Eigenschaften gemischt vorliegen. Alle Varianten von bekannten aus Leichtbaustählen dieser Art erzeugten Bleche weisen allerdings dann, wenn sie Streckgrenzen von mehr als 330 MPa besitzen, spezifische Eigenschaftsnachteile auf. So können z.B. Streuungen der Spröd-Duktil-Übergangstemperatur, Temperaturabhängigkeiten der Eigenschaften oder ein anisotropes Verformungsverhalten auftreten.

Die Aufgabe der Erfindung bestand daher darin, ein Verfahren zu nennen, das die zuverlässige Herstellung von Stahlprodukten aus einem Leichtstahl ermöglicht, die auch bei hohen Streckgrenzen ein isotropes Verformungsverhalten aufweisen und tieftemperaturduktil sind.

Diese Aufgabe wird durch ein Verfahren zum Herstellen eines Stahlprodukts, insbesondere eines Stahlblechs oder -bands, gelöst,
- bei dem aus einem Stahl, der (in Gewichts-%):
   C: ≤ 1,00 %,
   Mn: 7,00 - 30,00 %,
   Al: 1,00 - 10,00 %,
   Si: > 2,50 - 8,00 %,
   Al + Si: > 3,50 - 12,00 %,
   B: < 0,01 %,
   Ni: < 8,00 %,
   Cu: < 3,00 %,
   N: < 0,60 %,
   Nb: < 0,30 %,
   Ti: < 0,30 %,
   V: < 0,30 %,
   P: < 0,01 %
   und als Rest Eisen und unvermeidbare Verunreinigungen enthält, ein Stahlband erzeugt wird,
- bei dem aus dem Stahlband ein Kaltband kaltgewalzt wird, und
- bei dem aus dem durch das Kaltwalzen erhaltenen Kaltband durch eine mit einem Kaltverformungsgrad von 2,5 % bis 25 % erfolgende Kaltverformung das Stahlprodukt fertig hergestellt wird.

Gemäß der Erfindung werden hohe Streckgrenzen der fertigen Stahlprodukte durch einen Kaltverformungsprozess eingestellt, dem das Stahlband unterzogen wird, nachdem es die üblichen Schritte der Stahlbandherstellung durchlaufen hat. Ausgehend von Leichtstählen der erfindungsgemäß vorgegebenen Zusammensetzung lassen sich aus Kaltbändern in erfindungsgemäßer Weise Produkte herstellen, die hohe Streckgrenzen bei gleichzeitig guter Verformbarkeit besitzen. Wesentlich ist dabei, dass die Kaltverformung mit ausreichenden Verformungsgraden zum Abschluss der Herstellung durchgeführt wird.

Die erfindungsgemäße Kaltverformung kann beispielsweise durch Nachwalzen oder Streckbiegerichten des kaltbands durchgeführt werden. In diesen Fällen handelt es sich bei dem erfindungsgemäß hergestellten Produkt um ein kaltgewalztes Stahlblech oder -band, dessen Streckgrenze regelmäßig oberhalb von 330 MPa liegt.

Diesen Mindestwert ebenfalls sicher einhaltende Streckgrenzen lassen sich auch dadurch erreichen, dass die erfindungsgemäß durchgeführte Kaltverformung Teil eines Prozesses zur Herstellung einer fertigen Bauteilform ist. So lässt sich die im letzten Schritt des erfindungsgemäßen Verfahrens absolvierte Kaltverformung beispielsweise auch als Tiefziehen, Streckziehen oder Hydroforming durchführen. Wesentlich ist dabei lediglich, dass ein ausreichender Verformungsgrad erzielt wird, der über dem beim konventionellen Dressieren üblichen Verformungsgrad liegt.

Überraschend hat sich gezeigt, dass ausgehend von der erfindungsgemäß verwendeten Stahllegierung durch die zum Abschluss des Herstellverfahrens, ohne nachfolgende nochmalige Glühung, durchgeführte Kaltverformung eine deutliche Erhöhung der Streckgrenzen eintritt, ohne dass es dadurch zu entscheidenden Einbuße der Isotropie oder der Duktilität des Werkstoffs kommt. So zeichnen sich erfindungsgemäß erzeugte Produkte, insbesondere Bleche oder Bänder, durch eine optimale Kombination aus Bruchdehnung und Streckgrenze aus. Zusätzlich weisen sie TWIP-Eigenschaften auf. Sie sind als solche herkömmlich erzeugten und zusammengesetzten Leichtstahlprodukten deutlich überlegen. Mit dem erfindungsgemäßen Verfahren ist es somit möglich, auf einfache weise Leichtstahlprodukte mit höchsten Streckgrenzen herzustellen, die sich durch eine gute Verformbarkeit bei geringem Gewicht auszeichnen.

Die Sicherheit, mit der das erfindungsgemäß ermöglichte Arbeitsergebnis erreicht wird, kann dadurch verbessert werden, dass der Kaltverformungsgrad höchstens 15 %, insbesondere höchstens 10 %, beträgt.

Als Ausgangsprodukt für die Herstellung von erfindungsgemäßen Stahlprodukten lassen sich Warmbänder oder Kaltbänder nutzen. Die Warmbandherstellung kann dabei die üblichen Verfahrensschritte umfassen. So kann ein Stahl mit der erfindungsgemäßen Zusammensetzung zu Brammen, Dünnbrammen oder gegossenem Band vergossen werden. Diese Vorprodukte werden dann zu Warmband warmgewalzt, das zu Coils gehaspelt wird.

Nach dem Haspeln wird das Warmband zu Kaltband kaltgewalzt, das anschließend erforderlichenfalls rekristallisierend geglüht wird, bevor es wiederum als letztem Schritt des erfindungsgemäßen Verfahrens der Kaltverformung mit 2,5 % bis 25 % betragenden Kaltverformungsgraden unterzogen wird.

Ist insbesondere bei der Verwendung von Brammen eine Wiedererwärmung vor dem Warmwalzen erforderlich, so sollte die Wiedererwärmungstemperatur nicht unter 1100 °C liegen. In solchen Fällen dagegen, in denen das Ausgangsprodukt in einem kontinuierlichen Arbeitsablauf nach dem Gießen dem Warmwalzen zugeführt wird, kann dies auch ohne zwischengeschaltete Wiedererwärmung im Direkteinsatz erfolgten.

Indem das Warmband erfindungsgemäß mit mindestens 800 °C betragenden Warmwalzendtemperaturen warmgewalzt und bei niedrigen Temperaturen gehaspelt wird, wird die positive Wirkung des Kohlenstoffs und, sofern es anwesend ist, insbesondere des Bors im vollen Umfang genutzt. So bewirken Bor und Kohlenstoff bei in diesem Bereich warmgewalzten Bändern höhere Zugfestigkeits- und Streckgrenzen-Werte bei nach wie vor akzeptablen Bruchdehnungswerten. Mit zunehmender Warmwalzendtemperatur nehmen Zugfestigkeit und Streckgrenze ab, während die Dehnungswerte ansteigen. Durch Variation der Walzendtemperaturen im durch die Erfindung vorgegebenen Rahmen lassen sich so die gewünschten Eigenschaften des erhaltenen Stahlbands oder-blechs gezielt und auf einfache Weise beeinflussen.

Durch die Beschränkung der Haspeltemperatur auf Werte von maximal 700 °C wird eine Werkstoffversprödung sicher vermieden. Es ist festgestellt worden, dass es bei höheren Haspeltemperaturen zur Bildung von Sprödphasen kommen kann, welche beispielsweise Materialabplatzungen nach sich ziehen können und als solche die Weiterverarbeitung erschweren oder sogar unmöglich machen.

Der Kaltwalzgrad des beim der Rekristallisationsglühung vorangehenden Kaltwalzen liegt bevorzugt im Bereich von 30 % bis 75 %, um die optimierten Verformungs- und Festigkeitseigenschaften des fertigen erfindungsgemäßen Stahlprodukts sicher zu erreichen.

Die Glühtemperaturen bei der Rekristallisationsglühung liegen bevorzugt zwischen 600 °C bis 1100 °C. Die Glühung kann dabei in der Haube im Temperaturbereich von 600 °C bis 750 °C oder im Durchlaufglühofen bei Temperaturen von 750 °C bis 1100 °C durchgeführt werden.

Aufgrund des auf Gehalte oberhalb von 2,50 Gew.-%, bevorzugt oberhalb von 2,70 Gew.-%, beschränkte Si-Gehalte weisen erfindungsgemäße Stahlbleche eine gegenüber solchen Leichtstahlblechen oder -blechen, die geringere Si-Gehalte besitzen, eine verbesserte Kaltwalzbarkeit auf. Die hohe Zugabe von Si drückt sich in gleichmäßigeren Streckgrenzen-und Zugfestigkeitswerten sowie in höheren Bruchdehnungs-und Gleichmaßdehnungswerten aus. Silizium führt in erfindungsgemäßen Stählen darüber hinaus zu höheren r- und n-Werten sowie zu einer isotropen Ausbildung der mechanischen Eigenschaften. Die Obergrenze der aus AI- und Si-Gehalten gebildeten Summe liegt bei 12 %, da eine über diese Grenze hinausgehende Summe der Al- und Si-Gehalte die Gefahr einer Versprödung mit sich bringen würde.

Überraschend hat sich herausgestellt, dass die gezielte Zugabe von Bor bei erfindungsgemäßen Stählen zu einer Verbesserung der Eigenschaften und der Herstellbarkeit führen kann. Daher ist gemäß einer vorteilhaften Ausgestaltung der Erfindung vorgesehen, dass der Stahl Gehalte an Bor aufweist. Sofern Bor zur Verbesserung der Abstimmung von Streckgrenze und Verformbarkeit zugegeben wird, kann dazu der Bor-Gehalt im Bereich von 0,002 Gew.-% bis 0,01 Gew.-%, insbesondere 0,003 bis 0,008 Gew.-%, liegen.

Die günstigen Einflüsse der Legierung auf die mechanischtechnologischen Eigenschaften erfindungsgemäßer Stahlbleche können dadurch noch unterstützt werden, wenn ein Mindestmaß von 0,10 Gew.-% an Kohlenstoff im erfindungsgemäßen Stahl nachweisbar ist.

Aufgrund ihres besonderen Eigenschaftsspektrums lassen sich aus in erfindungsgemäßer Weise insbesondere erzeugten Kaltbandprodukten besonders gut tragende sowie crashrelevante Karosseriebauteile für Fahrzeuge herstellen. Diese können bei geringem Gewicht beispielsweise zum besonders wirksamen Schutz der Insassen eines Fahrzeugs eingesetzt werden. Erfindungsgemäß hergestellte Produkte zeichnen sich in diesem Zusammenhang durch ein besonders hohes Energieabsorptionsvermögen bei plötzlich auftretender Belastung aus.

Das geringe Gewicht bei gleichzeitig guter Verformbarkeit und Festigkeit macht es darüber hinaus möglich, aus erfindungsgemäß erzeugten Produkten Räder für Fahrzeuge, insbesondere Kraftfahrzeuge, herzustellen.

Auch lassen sich aus erfindungsgemäß erzeugten Produkten Bauteile erzeugen, die im Bereich der Tieftemperaturtechnik eingesetzt werden. Das günstige Eigenschaftsspektrum erfindungsgemäß erzeugter Kaltbandprodukte bleibt auch bei niedrigen, im Bereich der Kryotechnik üblichen Temperaturen erhalten.

Das bei erfindungsgemäßer Herstellweise erzielte gute Energieabsorptionsvermögen macht das erfindungsgemäße Verfahren darüber hinaus besonders geeignet zur Herstellung von Produkten, die zur Herstellung von für den Schutz vor impulsförmig auftreffender Belastungen bestimmten Schutzelementen verwendet werden.

Nachfolgend wird die Erfindung anhand von Ausführungsbeispielen erläutert.

Ein Leichtstahl mit (Angaben in Gew.-%) 0,0070 % C, 25,9 % Mn, 0,013 % P, 0,0006 % S, 2,83 % Si, 2,72 % Al, 0,0045 % N und als Rest Eisen sowie unvermeidbare Verunreinigungen, zu denen beispielsweise geringfügige Gehalte an Cu, Cr, Ni, As, Sn, Ti, V, Nb, B und Mg zählen, wurde zu Brammen vergossen.

Die Brammen wurden nach einer Wiedererwärmung auf 1150 °C bei einer 850 °C betragenden Warmwalzendtemperatur zu einem Warmband warmgewalzt und dann bei einer Haspeltemperatur von 500 °C gehaspelt. Anschließend wurde das Warmband zu Kaltband mit einer Dicke von 1 mm bei einem Verformungsgrad von 65 % kaltgewalzt. Nach dem Kaltwalzen wurde das Kaltband bei einer Temperatur von 950 °C im Durchlauf rekristallisierend geglüht.

In diesem Zustand war das Kaltband isotrop. Seine jeweils in Längsrichtung ermittelten mechanischen Eigenschaften sind in Tabelle 1 eingetragen (Kaltverformungsgrad = 0 %).

**Tabelle 1**

| Kaltverformungsgrad | R_{p0,2} | Rₘ | Ag | A₈₀ | n | r |
|---|---|---|---|---|---|---|
| [%] | [MPa] | [MPa] | [%] | [%] | | |
| 0 | 326 | 657 | 52,8 | 58,8 | 0,373 | 0,93 |
| 2,5 | 400 | 675 | 47,5 | 53,4 | 0,307 | 0,90 |
| 5 | 464 | 699 | 41,8 | 48,2 | 0,257 | 0,85 |
| 10 | 568 | 748 | 30,9 | 40,5 | 0,199 | 0,80 |
| 30 | 870 | 1039 | 3,0 | 12,1 | - | - |
| 50 | 1051 | 1225 | 2,9 | 5,4 | - | - |

Zum Nachweis der Wirkung der Erfindung wurden nach dem Rekristallisationsglühen Teilstücke des Kaltbandes mit einem Verformungsgrad von 2,5 %, 5 %, 10 %, 30 % bzw. 50 % kaltgewalzt. Die für jedes der Teilstücke jeweils in Längsrichtung ermittelten mechanischen Eigenschaften sind ebenfalls in Tabelle 1 eingetragen.

Es zeigte sich, dass beim nach dem Nachwalzen erhaltenen Kaltbandprodukt eine optimale Kombination aus Dehnungs- und Streckgrenzen dann erreicht wird, wenn beim Nachwalzen des Kaltbandes ein Kaltverformungsgrad von 10 % eingehalten wurde. So konnte bis zum Kaltverformungsgrad von 10 % die Streckgrenze R_{p0,2} um mehr als 70 % angehoben und die Zugfestigkeit Rₘ um mehr als 10 % verbessert werden. Die Werte der Gleichmaßdehnung Ag, der A₈₀-Dehnung, des r-Wertes und des n-Wertes blieben dabei auf einem Niveau, welches weit oberhalb dessen liegt, was bei konventionellen Stählen vergleichbarer Streckgrenze erreicht wird. Erst bei einem Kaltverformungsgrad von 30 % kommt es zu einem dramatischen Abfall der Dehnungseigenschaften.

In einem anderen Versuch wurde ein weiteres, hinsichtlich seiner Zusammensetzung und der bis zum Abschluss seiner rekristallisierenden Glühung absolvierten Arbeitsschritte mit dem voranstehend erläuterten Kaltband übereinstimmendes Kaltband erzeugt. Aus einem Abschnitt dieses Kaltbandes ist dann, ohne zuvor eine Kaltverformung durchzuführen, ein hohlprofilförmiger Crashkörper erzeugt worden. Ein anderes Teilstück des rekristallisierungsgeglühten Kaltbandes ist dagegen in erfindungsgemäßer Weise mit einem Kaltverformungsgrad von 7 % durch Nachwalzen kaltverformt worden. Aus dem derart erfindungsgemäß erzeugten Kaltbandprodukt ist dann ebenfalls ein hohlprofilförmiger Crashkörper hergestellt worden.

Die beiden ca. 150 kg schweren Crashkörper sind anschließend in einem Fallversuch, bei dem sie mit einer Fallgeschwindigkeit von 50 km/h auf ein Hindernis trafen, hinsichtlich ihres Energieaufnahmevermögens untersucht worden. Es zeigte sich, dass der aus dem erfindungsgemäß nachgewalzten Kaltbandprodukt hergestellte Crashkörper trotz des Umstandes, dass seine Wandstärke aufgrund der zusätzlichen Kaltverformung deutlich gegenüber der des anderen Crashkörpers vermindert war, ein deutlich besseres Energieabsorptionsvermögen besaß.

In einem dritten Versuch wurde schließlich wiederum basierend auf der oben angegebenen Zusammensetzung und unter Anwendung der bereits erläuterten Verfahrensschritte ein rekristallisierungsgeglühtes Kaltband erzeugt. Das so beschaffene Kaltband ist dann durch Streckziehen in erfindungsgemäßer Weise kaltverformt worden. Der dabei erreichte Kaltverformungsgrad betrug wiederum 10 %. Durch diese Kaltverformung konnte die Streckgrenze von 320 MPa im nur rekristallisierungsgeglühten Zustand auf 520 MPa nach der auf die Rekristallisierungsglühung folgenden Kaltverformung gesteigert werden. Die Zugfestigkeiten stiegen gleichzeitig von 640 MPa auf 710 MPa. Der r-Wert wurde kaum beeinflusst. Die Dehnungswerte nahmen mit zunehmendem Verformungsgrad zwar von 60 % auf ca. 50 % und der n-Wert von 0,39 auf 0,27 ab. Auch diese Werte lagen jedoch weit oberhalb der Dehnungseigenschaften und n-Werte, die bei vergleichbar höherfesten, konventionell erzeugten Stählen der gleichen Streckgrenzenklasse festgestellt werden können. Auch bei einer Kaltverformung des Kaltbandes durch Streckziehen wies das erhaltene Produkt somit eine optimale Kombination aus Streckgrenze- und Dehnungswerten auf.

## Patentansprüche

1. Verfahren zum Herstellen eines Stahlproduktes, insbesondere eines Stahlblechs oder -bands, mit hoher Streckgrenze,
- bei dem aus einem Stahl, der (in Gewichts-%) :
C: ≤ 1,00 %,
Mn: 7,00 - 30,00 %,
Al: 1, 00 - 10,00 %,
Si: > 2,50 - 8,00 %,
Al + Si: > 3,50 - 12,00 %,
B: < 0,01 %,
Ni: < 8,00 %,
Cu: < 3,00 %,
N: < 0,60 %,
Nb: < 0,30 %,
Ti: < 0,30 %,
V: < 0,30 %,
P: < 0,01 %
und als Rest Eisen und unvermeidbare Verunreinigungen enthält, ein Stahlband erzeugt wird,
- bei dem aus dem Stahlband ein Kaltband kaltgewalzt wird, und
- bei dem aus dem durch das Kaltwalzen erhaltenen Kaltband durch eine mit einem Kaltverformungsgrad von 2,5 % bis 25 % erfolgende Kaltverformung das Stahlprodukt fertig hergestellt wird.

2. Verfahren nach Anspruch 1, **dadurch gekennzeichnet, dass** der Kaltverformungsgrad höchstens 15 % beträgt.

3. Verfahren nach Anspruch 2, **dadurch gekennzeichnet, dass** der Kaltverformungsgrad höchstens 10 % beträgt.

4. Verfahren nach einem der voranstehenden Ansprüche, **dadurch gekennzeichnet, dass** die Erzeugung des Stahlbands oder -blechs folgende Arbeitsschritte umfasst:
- Vergießen des Stahls zu einem Vormaterial, wie Brammen, Dünnbrammen oder gegossenes Band,
- Warmwalzen des Vormaterials zu einem Armband,
- Haspeln des Warmbands,
- Kaltwalzen des Warmbands zu dem Kaltband.

5. Verfahren nach Anspruch 4, **dadurch gekennzeichnet, dass** das Vormaterial vor dem Warmwalzen auf mindestens 1100 °C wiedererwärmt wird.

6. Verfahren nach Anspruch 4, **dadurch gekennzeichnet, dass** das Vormaterial mit einer mindestens 1100 °C betragenden Temperatur direkt zum Warmwalzen eingesetzt wird.

7. Verfahren nach einem der Ansprüche 4 bis 6, **dadurch gekennzeichnet, dass** die Endtemperatur des Warmwalzens mindestens 800°C beträgt.

8. Verfahren nach einem der Ansprüche 4 bis 7, **dadurch gekenntzeichnet, dass** die Haspeltemperatur 450 °C bis 700 °C beträgt.

9. Verfahren nach einem der Ansprüche 4 bis 8, **dadurch gekennzeichnet, dass** das Kaltband nach dem Kaltwalzen rekristallisierend geglüht wird, und dass das Kaltband nach dem rekristallisierenden Glühen fertig kaltverformt wird.

10. Verfahren nach Anspruch 9, **dadurch gekennzeichnet, dass** die rekristallisierende Glühung bei einer Glühtemperatur von 600 °C bis 1100°C durchgeführt wird.

11. Verfahren nach Anspruch 10, **dadurch gekennzeichnet, dass** die Glühung als Haubenglühung bei einer 600 °C bis 750 °C betragenden Glühtemperatur durchgeführt wird.

12. Verfahren nach Anspruch 11, **dadurch gekennzeichnet, dass** die Glühung als Durchlaufglühung bei einer 750 °C bis 1100 °C betragenden Glühtemperatur durchgeführt wird.

13. Verfahren nach einem der Ansprüche 9 bis 12, **dadurch gekennzeichnet, dass** das Kaltwalzen mit einem Kaltwalzgrad von 30 % bis 75 % durchgeführt wird.

14. Verfahren nach einem der voranstehenden Ansprüche, **dadurch gekennzeichnet, dass** der Stahl mehr als 2,70 Gew.-% Silizium enthält.

15. Verfahren nach einem der voranstehenden Ansprüche, **dadurch gekennzeichnet, dass** der Stahl 0,002 Gew.-% bis 0,01 Gew.-% Bor enthält.

16. Verfahren nach Anspruch 15, **dadurch gekennzeichnet, dass** der Stahl 0,003 bis 0,008 Gew.-% Bor enthält.

17. Verfahren nach einem der voranstehenden Ansprüche, **dadurch gekennzeichnet, dass** der Stahl 0,10 - 1,00 Gew.-% Kohlenstoff enthält.

## Claims

1. Method for producing a steel product, in particular a steel sheet or steel strip, with a high yield strength,
- wherein a steel strip is produced from steel which contains (in % by weight):
C: ≤1.00 %
Mn: 7.00 to 30.00 %
Al: 1.00 to 10.00 %
Si: > 2.50 to 8.00 %
Al + Si: > 3.50 to 12.00 %
B: < 0.01 %
Ni: < 8.00 %
Cu: < 3.00 %
N: < 0.60 %
Nb: < 0.30 %
Ti: < 0.30 %
V: < 0.30 %
P: < 0.01 %
and iron and unavoidable impurities as the remainder,
- wherein the steel strip is cold rolled to form a cold strip,
- wherein the steel product is produced from the cold strip obtained through cold rolling by cold forming that takes place at a degree of cold forming of 2.5 to 25 %.

2. Method according to Claim 1, **characterised in that** the degree of cold forming is 15 % maximum.

3. Method according to Claim 2, **characterised in that** the degree of cold forming is 10 % maximum.

4. Method according to any one of the preceding claims, **characterised in that** production of the steel strip or sheet comprises the following working steps:
- casting the steel to form an ingoing material, such as slabs, thin slabs or a cast strip,
- hot rolling the ingoing material to form a hot strip,
- winding the hot strip,
- cold rolling the hot strip to form the cold strip.

5. Method according to Claim 4, **characterised in that** the ingoing material is reheated to at least 1100 °C before hot rolling.

6. Method according to Claim 4, **characterised in that** the ingoing material is used directly for hot rolling at a temperature of at least 1100 °C.

7. Method according to any one of Claims 4 to 6, **characterised in that** the end temperature of the hot rolling is at least 800 °C.

8. Method according to any one of Claims 4 to 7, **characterised in that** the winding temperature is 450 °C to 700 °C.

9. Method according to any one of Claims 4 to 8, **characterised in that**, after cold rolling, the cold strip is recrystallisation annealed, and **in that**, after recrystallisation annealing, the cold strip is finish cold formed.

10. Method according to Claim 9, **characterised in that** recrystallisation annealing is carried out at an annealing temperature of 600 °C to 1100 °C.

11. Method according to Claim 10, **characterised in that** annealing is carried out as bell-type annealing at an annealing temperature of 600 °C to 750 °C.

12. Method according to Claim 11, **characterised in that** annealing is carried out as continuous annealing at an annealing temperature of 750 °C to 1100 °C.

13. Method according to any one of Claims 9 to 12, **characterised in that** cold rolling is carried out at a degree of cold rolling of 30 % to 75 %.

14. Method according to any one of the preceding claims, **characterised in that** the steel contains more than 2.70 % by weight silicon.

15. Method according to any one of the preceding claims, **characterised in that** the steel contains 0.002 % by weight to 0.01 % by weight boron.

16. Method according to Claim 15, **characterised in that** the steel contains 0.003 to 0.008 % by weight boron.

17. Method according to any one of the preceding claims, **characterised in that** the steel contains 0.10 to 1.00 % by weight carbon.

## Revendications

1. Procédé de fabrication d'un produit en acier, en particulier d'une tôle ou d'un feuillard, qui présente une limite d'étirage élevée,
- selon lequel un feuillard d'acier est fabriqué à partir d'un acier qui contient (en % de poids) :
C : ≤ 1,00 %,
Mn : 7,00 - 30,00 %
Ail : 1,00 - 10,00 %
Si : > 2,50 - 8,00 %
Al + Si : > 3,50 - 12,00 %
B : < 0,01 %
Ni : < 8,00 %
Cu : < 3,00 %
N : < 0, 60 %
Nb : < 0,30 %
Ti : < 0,30 %
V : < 0,30 %
P : < 0,01 %
et, en tant que reste, du fer et des impuretés inévitables,
- selon lequel un feuillard à froid est laminé à partir du feuillard d'acier, et
- selon lequel, à partir du feuillard à froid, obtenu par le laminage à froid, le produit en acier est terminé par un formage à froid du produit en acier, qui est exécuté avec un taux de déformation de 2,5 % à 25 %.

2. Procédé selon la revendication 1, **caractérisé en ce que** le taux de déformation à froid est tout au plus de 15 %.

3. Procédé selon la revendication 1, **caractérisé en ce que** le taux de formage à froid est tout au plus de 10 %.

4. Procédé selon l'une des revendications précédentes, **caractérisé en ce que** la fabrication du feuillard ou de la tôle en acier comprend les étapes suivantes :
- coulée de l'acier en un produit primaire, comme brames, brames minces ou feuillard coulé,
- laminage à chaud du produit primaire en un feuillard à chaud,
- bobinage du feuillard à chaud,
- laminage à froid du feuillard à chaud en un feuillard à froid.

5. Procédé selon la revendication 4, **caractérisé en ce que** le produit primaire est chauffé de nouveau à une température d'au moins 1100 °C avant le laminage à chaud.

6. Procédé selon la revendication 4, **caractérisé en ce que** le produit primaire est directement utilisé pour le laminage à chaud à une température d'au moins 1100 °C.

7. Procédé selon l'une des revendications 4 à 6, **caractérisé en ce que** la température finale du laminage à chaud est de 800 °C.

8. Procédé selon l'une des revendications 4 à 7, **caractérisé en ce que** la température de bobinage est de 450 °C à 700 °C.

9. Procédé selon l'une des revendications 4 à 8, **caractérisé en ce que** le feuillard à froid est soumis, après le laminage à froid, à un recuit recristallisant, et que le formage froid du feuillard à froid est terminé après le recuit recristallisant.

10. Procédé selon la revendication 9, **caractérisé en ce que** le recuit recristallisant est exécuté à une chaleur rouge de 600 °C à 1100 °C.

11. Procédé selon la revendication 10, **caractérisé en ce que** le recuit est exécuté en tant que recuit à cloche, à une chaleur rouge de 600 °C à 750 °C.

12. Procédé selon la revendication 11, **caractérisé en ce que** le recuit recristallisant est exécuté en tant que recuit en continu, à une chaleur rouge de 750 °C à 1100 °C.

13. Procédé selon l'une des revendications 9 à 12, **caractérisé en ce que** le laminage à froid est exécuté à un taux de laminage à froid de 30 % à 75 %.

14. Procédé selon l'une des revendications précédentes, **caractérisé en ce que** l'acier contient plus de 2,70 % en poids de silicium.

15. Procédé selon l'une des revendications précédentes, **caractérisé en ce que** l'acier contient 0,002 % en poids à 0,01 % en poids de bore.

16. Procédé selon la revendication 15, **caractérisé en ce que** l'acier contient 0,003 % en poids à 0,008 % en poids de bore.

17. Procédé selon l'une des revendications précédentes, **caractérisé en ce que** l'acier contient 0,10 % en poids à 1,00 % en poids de carbone.
